# EUROPEAN PATENT APPLICATION

(11) **EP 1 473 522 A1**
(43) Date of publication of application: **03.11.2004**
(21) Application number: 03782829.0
(22) Date of filing: 19.12.2003
(51) Int. Cl.: F24F 7/00, B01D 46/24

(54) **AIR-PURIFYING DEVICE**

(30) Priority: 24.12.2002 JP 2002371730
(71) Applicant: Kondoh Industries Ltd., Tokyo 105-0001 (JP); Cambridge Filter Japan, Ltd., Tokyo 105-0001 (JP)
(72) Inventor: Kisakibaru, Toshirou, Minato-ku, Tokyo 105-0001 (JP)
(74) Representative: von Hellfeld, Axel, Dr. Dipl.-Phys.
(86) International application number: PCT/JP2003/016324
(87) International publication number: WO 2004/059219

(57) **Abstract**

An air-purifying device whose space for installation has an elongated shape, air to which is supplied through a duct or a tube, and which can uniformly cause the air to exit the surrounding space. It comprises a hollow cylindrical filter (3) made by forming a filter media (1) in a cylindrical shape having an air passage (2) in the central hollow portion, and a pair of air intake members (6) made of a hollow cylindrical body that has a closed bottom (4) having an air intake hole (5) tightly fixed with sealing material on both ends of the hollow cylindrical filter so that the hole communicates with the air passage.

## Description

### Field of the Invention

The present invention relates to an air-purifying device using hollow cylindrical filters.

### Description of the Prior Art

A filter that is used for an air-purifying device is generally made by folding a sheet of filter media into the cross-sectional shape of saw teeth so as to increase the area through which the air to be filtered passes and then fixing it on a quadrilateral frame. The area of the filter media is adjusted by increasing or decreasing the width of each fold and the number of folds per unit length of it.

When the air goes through the area, a force equivalent to its loss of pressure will be applied to the area. As the size of it increases, one of the subjects to aim at is to decrease the force applied to it and to reinforce its strength, at the designing and manufacturing stage.

Further, the problem to be solved during its designing and manufacturing stage is how to equalize the distribution of the velocity of the air through the filter media. Since the thickness of the filter media is not uniform, the distribution of the pressure loss on its area is not uniform when the air passes through it. Further, in most cases it is difficult to maintain a uniform distribution of the velocity of the air upstream of the filter media. Thus it is also not easy to maintain the uniformity of the distribution of the velocity at the downstream end. As the filter becomes large, this becomes a big problem.

In addition, the production of a small filter of which the sheet of its media is folded and which has a saw-tooth-shaped cross section is difficult if the filter is installed in an elongated space and its air intake is formed at one or both ends of the space. It is also difficult to increase the air filtering area in the elongated space if the filter is made of conventional plate-shaped filter media.

Further, it is difficult to decrease the thickness of the filter media if it constitutes a plate-type filter having an air outlet from both sides of it.

The object of this invention is to solve the above problems, and to provide an air-purifying device comprising a filter containing a cylindrically-shaped filter media so as to let the air exit the annular portion of the hollow cylindrical filter media in a uniform distribution of the velocity circumferentially as well as longitudinally.

### Disclosures of the Invention

To achieve the above-mentioned object, the air-purifying device of the present invention comprises one or more hollow cylindrical filters made by forming a filter media in a cylindrical shape with an air passage in the central hollow portion, forming a pair of air intake members that each has an air intake hole fixed on both ends of the hollow cylindrical filters so that the holes communicate with the air passages of them at their upper and lower ends, and in some cases forming a casing with one or two slits for an air outlet in which the above hollow cylindrical filters are placed. Alternatively, the air-purifying device of the present invention may comprise one or more hollow cylindrical filters made by forming the filter media in a cylindrical shape with an air passage in the central hollow portion, an air intake member with an air intake hole fixed on each end of one side of the hollow cylindrical filters so that the holes communicate with the air passages of them at either end of their upper and lower ends, a cover securing the above hollow cylindrical filters at the other end, at which they do not communicate with the air intake member, and in some cases a casing with one or two slits for an air outlet in which the above hollow cylindrical filters are placed.

Accordingly, the air-purifying device of the present invention lets the air exit the annular portion of the hollow cylindrical filter media in a uniform distribution of the velocity circumferentially as well as longitudinally by using the hollow cylindrical filters made by forming the filter media in a cylindrical shape. It is preferable that the air-purifying device be used where the place that it will be installed is an elongated space, the air be supplied through a duct or a tube, and the filtered air be required to be discharged uniformly through the annular portion of the hollow cylindrical filter media. Further, the air-purifying device of the present invention can achieve such a good effect that it forms one or two air curtains by letting the purified air exit the slots of the casing in which the hollow cylindrical filter is placed.

### Brief Descriptions of the Drawings

Fig. 1 is a perspective view of the first embodiment of the air-purifying device of the present invention.
Fig. 2 is a transverse sectional view of the above embodiment.
Fig. 3 is a longitudinal sectional view of the above embodiment.
Fig. 4 is an illustration explaining the longitudinal distribution of the internal pressure of the hollow cylindrical filter constituting the air-purifying device of the present invention.
Fig. 5 is a perspective view of the second embodiment of the air-purifying device of the present invention.
Fig. 6 is a longitudinal sectional view of the above embodiment.
Fig. 7 is a perspective view of the third embodiment of the air-purifying device of the present invention.
Fig. 8 is a longitudinal sectional view of the above embodiment.
Fig. 9 is a perspective view of the fourth embodiment of the air-purifying device of the present invention.
Fig. 10 is a longitudinal sectional view of the above embodiment.
Fig. 11 is a perspective view of the fifth embodiment of the air-purifying device of the present invention.
Fig. 12 is a longitudinal sectional view of the above embodiment.
Fig. 13 is a longitudinal sectional view of the sixth embodiment of the air-purifying device of the present invention.
Fig. 14 is a longitudinal sectional view of the seventh embodiment of the air-purifying device of the present invention.
Fig. 15 is a longitudinal sectional view of the eighth embodiment of the air-purifying device of the present invention.
Fig. 16 is a partly sectional perspective view of the modified fifth embodiment of the air-purifying device of the present invention.
Fig. 17 is a partly sectional perspective view of the modified fifth embodiment of the air-purifying device of the present invention.
Fig. 18 is a perspective view of the ninth embodiment of the air-purifying device of the present invention.
Fig. 19 is a longitudinal sectional view of the above embodiment.
Fig. 20 is a perspective view of the tenth embodiment of the air-purifying device of the present invention.
Fig. 21 is a longitudinal sectional view of the above embodiment.
Fig. 22 is a partly sectional perspective view of the eleventh embodiment of the air-purifying device of the present invention.
Fig. 23 is a partly sectional perspective view of the twelfth embodiment of the air-purifying device of the present invention.
Fig. 24 is a partly sectional perspective view of the thirteenth embodiment of the air-purifying device of the present invention.
Fig. 25 is a partly sectional perspective view of the fourteenth embodiment of the air-purifying device of the present invention.
Fig. 26 is a perspective view of the fifteenth embodiment of the air-purifying device of the present invention.
Fig. 27 is a longitudinal sectional view of the above embodiment.
Fig. 28 is a perspective view of the sixteenth embodiment of the air-purifying device of the present invention.
Fig. 29 is a longitudinal sectional view of the above embodiment.
Fig. 30 is a partly sectional perspective view of the seventeenth embodiment of the air-purifying device of the present invention.
Fig. 31 is a partly sectional perspective view of the eighteenth embodiment of the air-purifying device of the present invention.

### Best Mode for Carrying Out the Invention

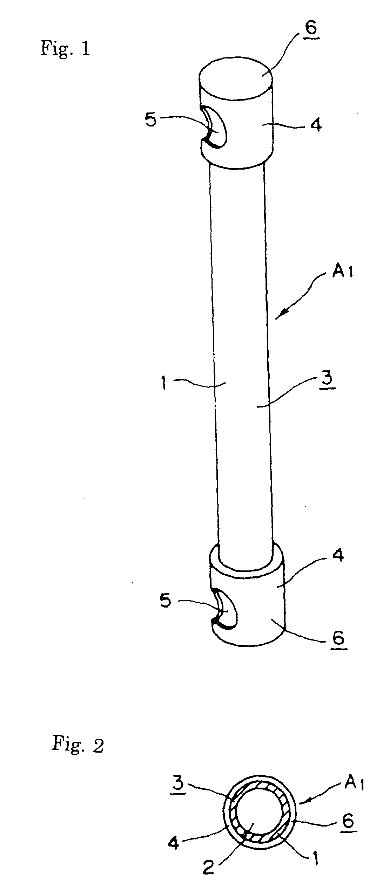

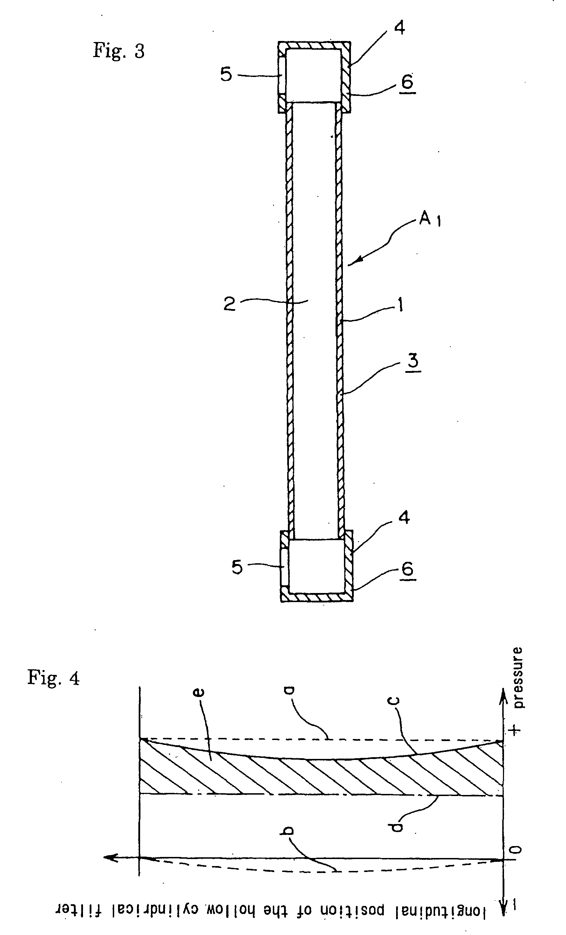

In reference to the drawings, Fig. 1 is a perspective view of the first embodiment of the air-purifying device of the present invention, Fig. 2 is a transverse sectional view of it, and Fig. 3 is a longitudinal sectional view of it. The air-purifying device A₁ of the first embodiment of the present invention comprises a hollow cylindrical filter 3 with an air passage 2 in the central hollow portion made by forming the filter media 1 in a cylindrical shape, and a pair of air intake members 6 made of a hollow cylindrical body 4 that has a closed bottom having an air supply hole 5 in its peripheral wall. The air intake members 6 are tightly fixed with sealing material (not shown) on both ends of the hollow cylindrical filter 3 so that their holes 5 communicate with the air passage 2 of the hollow cylindrical filter 3.

The air-purifying device A₁ of the first embodiment of the present invention, which is composed of the above elements, is made so that the air will enter the air passage 2 through the air supply holes 5 from an air-providing device (not shown) such as an air fan connected with each hole 5 of the air intake members 6 via air supply means such as an air duct or an air tube, and so that the air supplied into the air passage 2 will exit the annular portion of the hollow cylindrical filter 3 in a uniform distribution of the velocity circumferentially as well as longitudinally because of the pressure caused by the discharge of the air-providing device.

The air-purifying device A₁ of the first embodiment of the present invention is used when the place to install an air-purifying device is an elongated space, when the air intake points are limited to both ends of the elongated space, and when the filtered air has to exit that space in a uniform distribution of the velocity circumferentially as well as longitudinally.

Fig. 4 is an illustration explaining the longitudinal internal distribution of the pressure of the hollow cylindrical filter 3 constituting the air-purifying device A₁ of the first embodiment of the present invention. In the drawing, a characteristics curve (a) shows the internal pressure of the hollow cylindrical filter 3 under the condition that the surface of the filter is sealed so as not to let any air go through the filter. A curve (d) shows the pressure loss across the filter media 1 if the air goes through it in a uniform distribution of the velocity. A curve (b) shows a decrease of the internal pressure of the hollow cylindrical filter 3 as it decreases the airflow along the direction of the flow when the air is supplied into the hollow cylindrical filter 3.

When operating the purifier A₁, the pressure shown as curve (c), which is the result of subtracting the decrease of the internal pressure shown as curve (b) from the internal pressure shown as curve (a), is applied to the internal surface of the hollow cylindrical filter 3.

Accordingly, the air velocity across the filter media is determined by the pressure shown as zone (e), which is the result of subtracting the pressure loss, shown as curve (d), across the filter media when the air exits it under a uniform velocity from the pressure shown as curve (c).

Consequently, the desired purifier A₁ can be made by determining the length, the diameter, and the pressure loss across the media of the hollow cylindrical filter 3 so that the decrease of the internal pressure of the hollow cylindrical filter 3 resulting from the decrease of the air flow along the direction of the flow is small enough compared to the internal pressure of the hollow cylindrical filter 3, and so that the distribution of the pressure, shown as a shaded area, is uniform along the longitudinal direction.

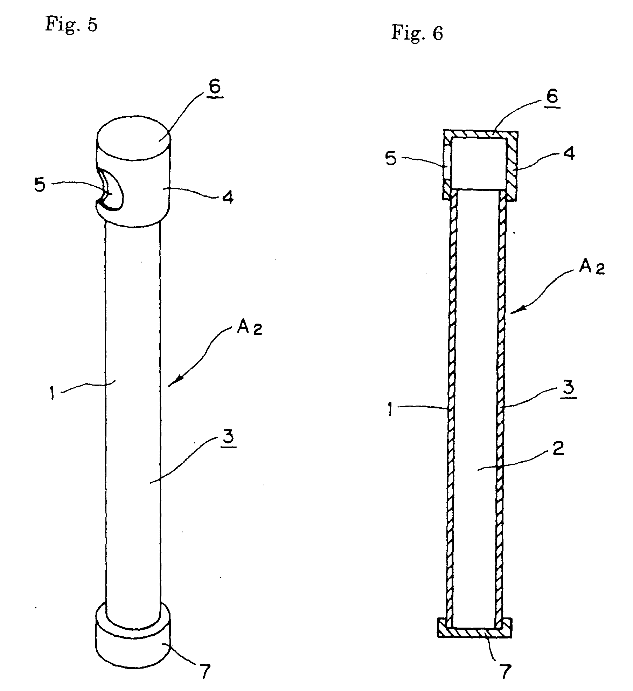

Fig. 5 is a perspective view of the second embodiment of the air-purifying device of the present invention and Fig. 6 is a longitudinal sectional view of it. While the air-purifying device A₁ of the first embodiment is constructed by putting a pair of air intake members 6, each with a hole 5 to supply air, on both ends of the hollow cylindrical filter 3, the air-purifying device A₂ of the second embodiment is constructed by putting an air intake member 6 with a hole 5 to supply air on the upper end of the hollow cylindrical filter 3 and putting the concave cap 7 on the lower end of the hollow cylindrical filter 3. Each connecting portion is tightly fixed with sealing material (not shown).

The air-purifying device A₂ of the second embodiment of the present invention is used when the place to install an air-purifying device is an elongated space, when the air is supplied via an air duct or an air tube, and when the filtered air has to exit from the elongated space in a uniform distribution of the velocity circumferentially as well as longitudinally.

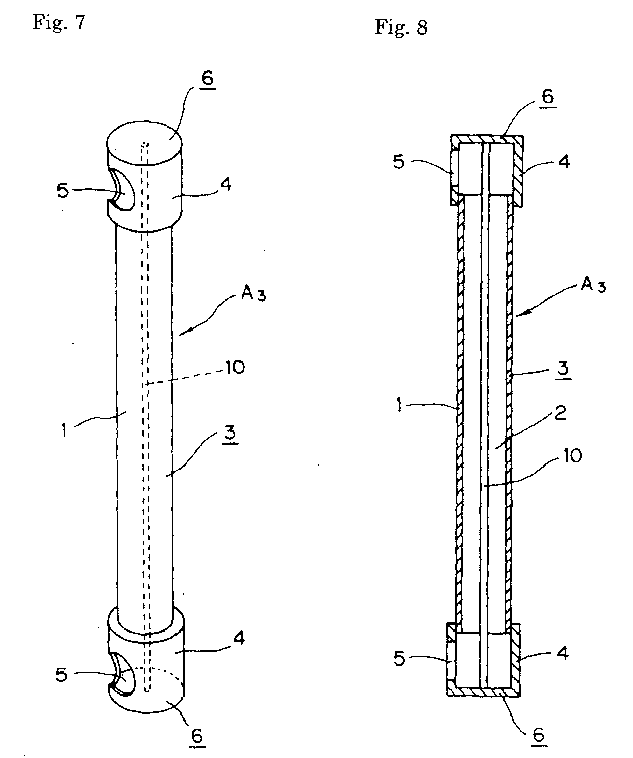

Fig. 7 is a perspective view of the third embodiment of the air-purifying device of the present invention, and Fig. 8 is a longitudinal sectional view of it. The air-purifying device A₃ of the third embodiment of the present invention is comprised by adding the supporting rod 10 to the air-purifying device A₁ of the first embodiment and coupling each air intake member 6 at both ends of the rod 10 in the air passage 2. Since both of the air intake members 6 are coupled to the supporting rod 10, it functions as a reinforcing bar to avoid applying too much force to the hollow cylindrical filter 3 as well as adjusting the length of the hollow cylindrical filter when assembling it. The supporting rod 10 also has the function of facilitating the work of sealing the gaps between the air intake members 6 and the hollow cylindrical filter 3. Since the other functions of the hollow cylindrical filter 3 are the same as those of the above-mentioned air-purifying device A₁ of the first embodiment, the explanations of them are omitted.

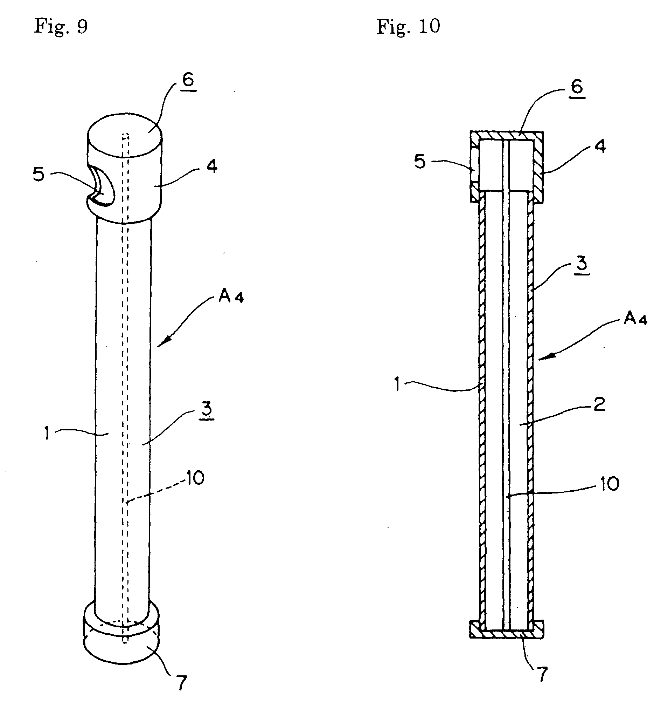

Fig. 9 is a perspective view of the fourth embodiment of the air-purifying device of the present invention, and Fig. 10 is a longitudinal sectional view of it. The air-purifying device A₄ of the fourth embodiment of the present invention is comprised by adding a supporting rod 10 to the air-purifying device A₂ of the first embodiment. The air intake member 6 and the cap 7 are coupled to the supporting rod 10, the former at one end and the latter at the other end of it in the air passage 2. Since the functions of furnishing the supporting rod 10 are the same as those of the air-purifying device A₃ of the third embodiment and the other functions are the same as those of the above-mentioned air-purifying device A₂ of the second embodiment, the explanations of them are omitted.

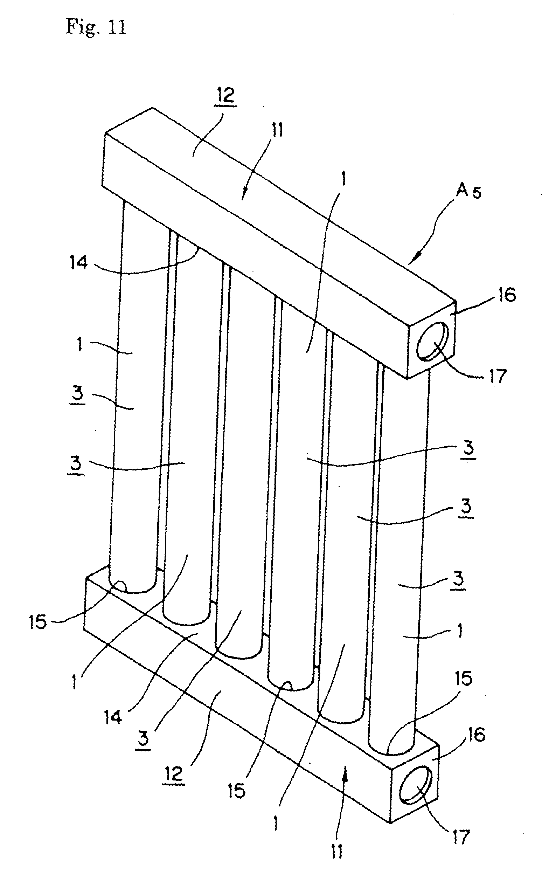

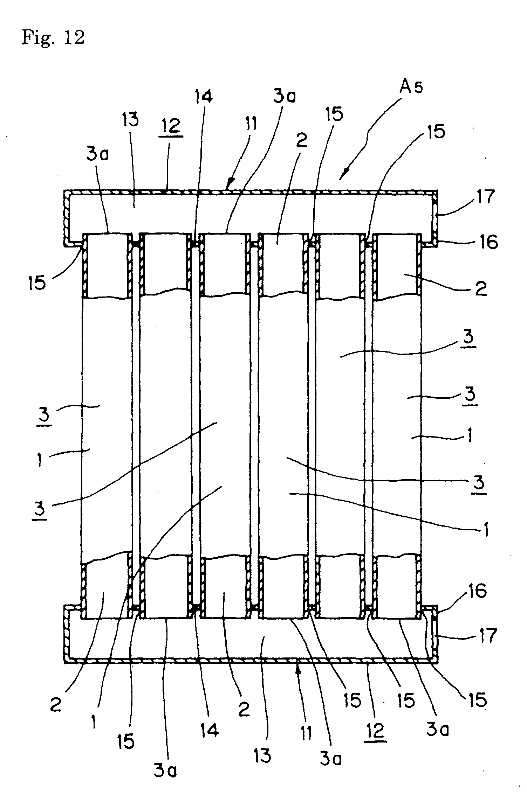

Fig. 11 is a perspective view of the fifth embodiment of the air-purifying device of the present invention, and Fig. 12 is a longitudinal sectional view of it. The fifth embodiment of the air-purifying device A₅ differs from the first embodiment of the air-purifying device A₁ in that the former is made of one hollow cylindrical filter 3, while the latter is made of multiple hollow cylindrical filters 3.

The fifth embodiment of the air-purifying device A₅ is made by tightly fixing a pair of air intake members 11 with sealing material (not shown) on the upper and lower ends of multiple hollow cylindrical filters 3 that are arranged in parallel close to each other.

The pair of the air intake members 11, on which the ends of the multiple hollow cylindrical filters are to be mounted, are constructed of two hollow elongated boxes 12 having a passage 13 for air inside of them and having holes 15 to be inserted on the upper and lower ends of each hollow cylindrical filter in the side plate 14 of each box. The upper and lower ends of each hollow cylindrical filter 3 are inserted on each of the holes 15 of the air intake members 11 and tightly fixed with sealing material (not shown) so as to let the openings 3a at both the upper and lower ends of the hollow cylindrical filters 3 communicate with the passage 13 for air. Further, one lateral plate 16 of each air intake member 11 is drilled with an air-supply hole 17 connected to the passage 13 for air. The purifier A₅ of the present invention is thus constructed.

The air-purifying device A₅ of the fifth embodiment of the present invention, which is composed of the above elements, is made so that the air will enter the air passage 2 through each passage 13 for air and each air supply hole 17 from an air-providing device (not shown), such as an air fan connected with each hole 17 of the air intake members 6. The air supplied into the air passage 2 will exit the annular portion of the hollow cylindrical filter 3 in a uniform distribution of the velocity circumferentially as well as longitudinally because of the pressure caused by the discharge of the air-providing device.

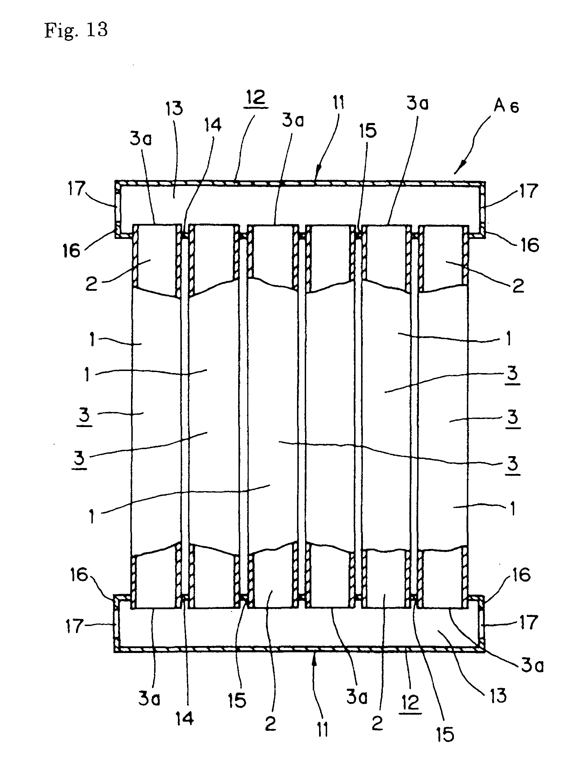

Fig. 13 is a longitudinal sectional view of the sixth embodiment of the air-purifying device of the present invention. While the air-purifying device A₅ of the fifth embodiment is made with a pair of the air intake members 11, where each member has an air supply hole 17 on one lateral plate 16, the air-purifying device A₆ of the sixth embodiment is made with a pair of the air intake members 11, wherein each member 11 has air supply holes 17 on both of two lateral plates 16. Since there are four air-supply holes 17, the air-purifying device A₆ of the sixth embodiment has a function wherein it can supply more air than can the air-purifying device A₅ of the fifth embodiment. Since the other functions of it are the same as those of the air-purifying device A₅ of the fifth embodiment, the explanations of them are omitted.

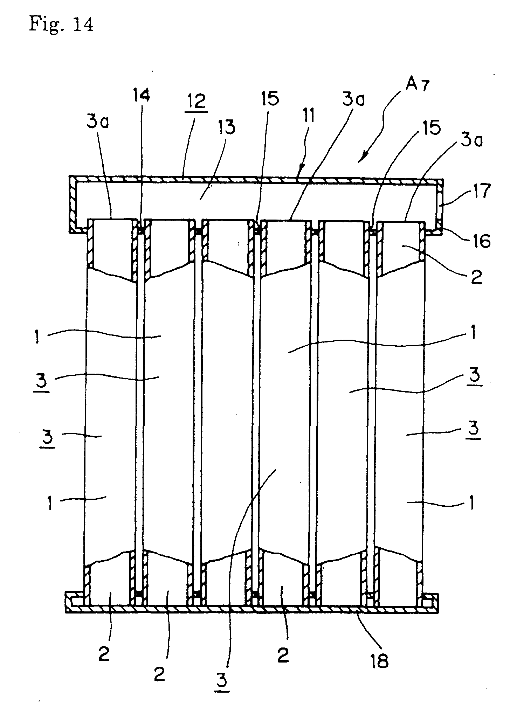

Fig. 14 is a longitudinal sectional view of the seventh embodiment of the air-purifying device of the present invention. While the air-purifying device A₅ of the fifth embodiment is made by tightly fixing a pair of the air intake members 11 with sealing material (not shown) on the upper and lower ends of multiple hollow cylindrical filters 3 that are arranged in parallel, the air-purifying device A₇ of the seventh embodiment is made by tightly fixing with sealing material (not shown) an air intake member 11 that has an air supply hole 17 on one lateral plate 16 on the upper end of multiple hollow cylindrical filters 3 and tightly fixing a concave cap 18 with sealing material (not shown) on the lower end of them. Since the other functions of it are the same as those of the air-purifying device A₅ of the fifth embodiment, except that the former can supply less air than the latter, the explanations of them are omitted.

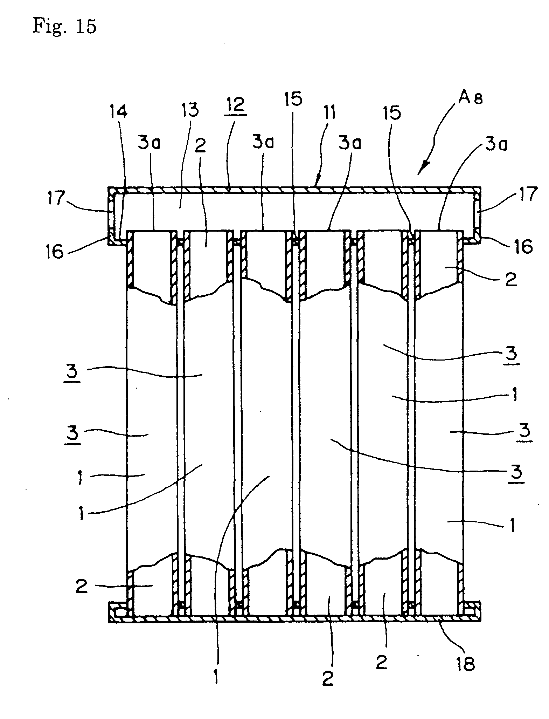

Fig. 15 is a longitudinal sectional view of the eighth embodiment of the air-purifying device of the present invention. While the air-purifying device A₇ of the seventh embodiment is made with an air intake member 11 having an air supply hole 17 on one lateral plate 16 of it, the air-purifying device A₈ of the eighth embodiment is made with an air intake member 11 having air supply holes 17 on both of the two lateral plates 16 of it. Since the other functions of it are the same as those of the air-purifying device A₇ of the seventh embodiment, except that the former can supply more air than can the latter, the explanations of them are omitted.

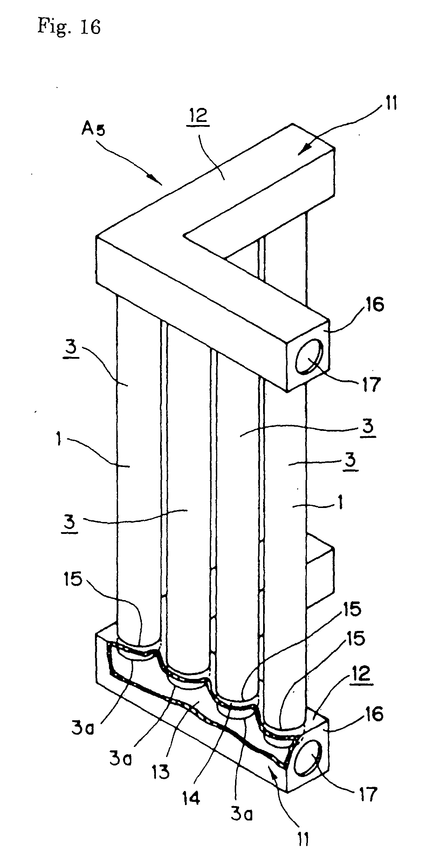

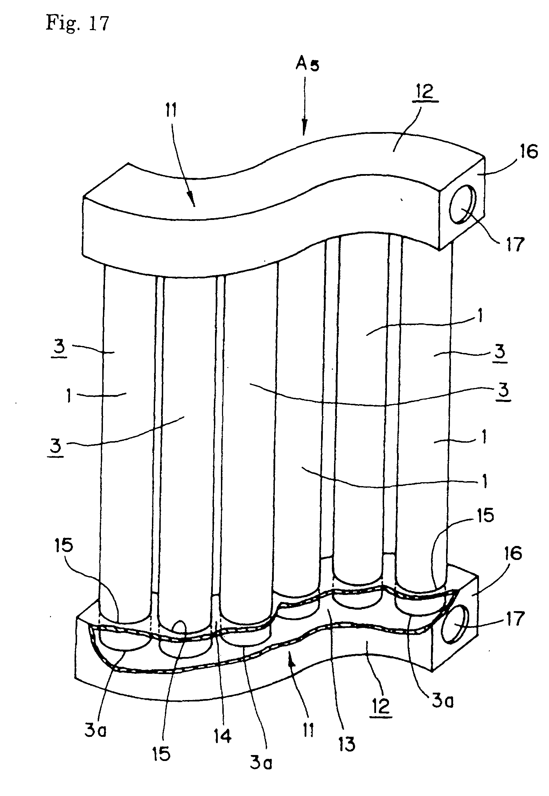

Both Fig. 16 and Fig. 17 are partly sectional perspective views of the modified fifth embodiment of the air-purifying device of the present invention. Fig. 16 shows the air-purifying device that is made by fixing a pair of L-shaped air-intake members 11 on each of both ends of multiple hollow cylindrical filters 3. Fig. 17 shows the an air-purifying device that is made by fixing a pair of S-shaped air-intake members 11 on each of both ends of multiple hollow cylindrical filters 3. Since the other functions of these air-purifying devices are the same as those of the air purifying device A₅ of the fifth embodiment, the explanations of them are omitted. Although they are not shown in the drawings, the air-purifying device of the present invention may be constructed by fixing a pair of L-shaped or S-shaped air-intake members 11 on the ends of multiple hollow cylindrical filters 3 as a modified embodiment of the air-purifying devices A₆ - A₈. Since the functions of these are the same as those of the air-purifying devices A₆ - A₈, the explanations of them are omitted.

Since the air-purifying devices A₅ - A₈ of the fifth - eighth embodiments can be formed in any shape that has the same diameter as that of the filters by arranging multiple hollow cylindrical filters in a certain position, and the air can exit both sides of the purifier, they are used when it is necessary for air to exit both sides. Further, since there are many types of the air-purifying devices A₅ - A₈ having a varying number of air-supply holes 17, such as 1, 2, or 4, each device can be specified as required.

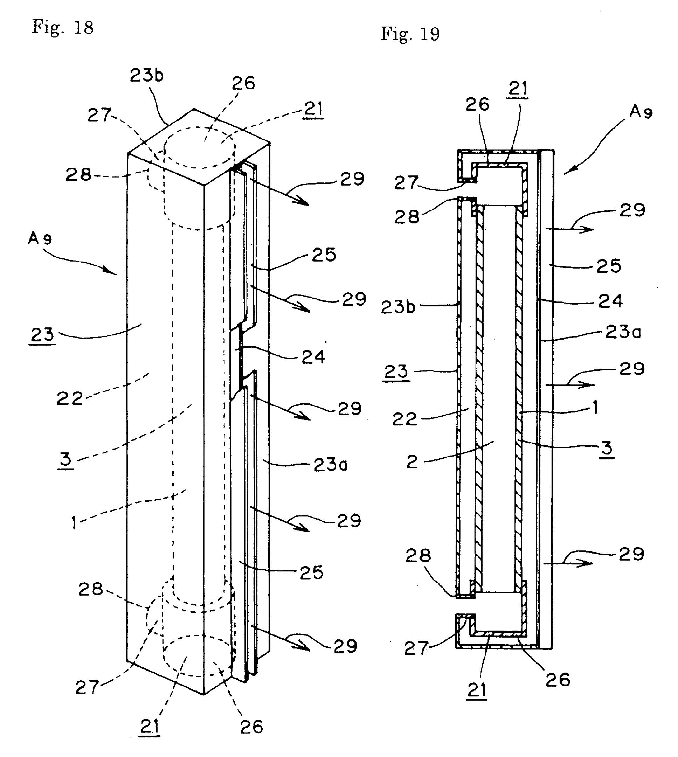

Fig. 18 is a perspective view of the ninth embodiment of the air-purifying device of the present invention and Fig. 19 is a longitudinal sectional view of it. The air-purifying device A₉ of the ninth embodiment is an air-purifying device that is made with one hollow cylindrical filter 3. It is used to make an air curtain.

The air-purifying device A₉ of the ninth embodiment, as shown in Figs. 18 and 19, is constructed by installing a hollow cylindrical filter. A pair of air intake members 21 is tightly fixed with sealing material (not shown) on its upper and lower ends. The filter is installed inside a hollow square pole-shaped casing 23, which is larger than the hollow cylindrical filter, and has a space for air to exit it. The casing 23 has a slit 24 for air to exit the central longitudinal line of its front plate 23a, and guide plates 25 are furnished on both sides of the slit 24.

Each said air intake member 21 is made of a hollow cylindrical body that has a closed bottom and an air-supply tube 27 that communicates with the air passage 2 of the hollow cylindrical filter, which passage 2 extends from its peripheral wall. The air-intake members 21 that are composed of the above elements are fixed tightly with sealing material (not shown) on the upper and lower ends of the hollow cylindrical filter 3, and a through-hole 28 is made at each upper and lower portion of the back plate 23b of the casing 23. Each said air supply tube 27 passes through each through-hole 28 and is fixed tightly with sealing material (not shown). As in Figs. 18 and 19, the through-holes 28 are made in the back plate 23b of the casing 23, but they can be made in any plate, except the front plate 23a having the slit 24.

The air-purifying device A₉ of the ninth embodiment of the present invention, which is composed of the above elements, is operated by blowing air into the air passage 2 through each air supply tube 27 from an air-providing device (not shown) such as an air fan connected with each air supply tube 27 of each air intake member 21. The air supplied into the air passage 2 exits the annular portion of the hollow cylindrical filter 3 into a space 22 for air to go into the casing 23 in a uniform distribution of velocity circumferentially as well as longitudinally. This is caused by the pressure of the discharge of the air-providing device. The air in the space 22 exits the slit 24, and forms an air curtain 29.

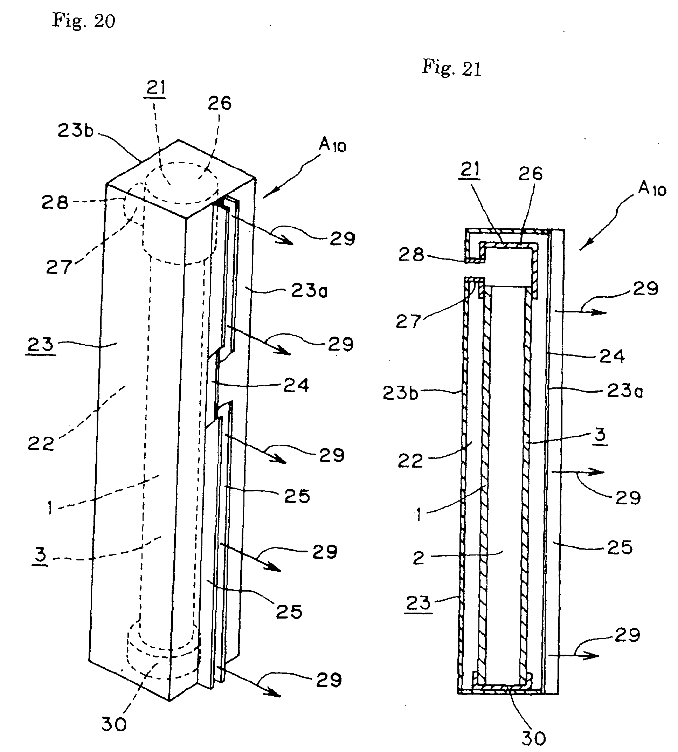

Fig. 20 is a perspective view of the tenth embodiment of the air-purifying device of the present invention and Fig. 21 is a longitudinal sectional view of it. While the air-purifying device A₉ of the ninth embodiment is constructed by tightly fixing a pair of air intake members 21 having an air supply tube 27 with sealing material (not shown) on the upper and lower ends of the hollow cylindrical filter 3, the air-purifying device A₁₀ of the tenth embodiment is constructed by tightly fixing a pair of air intake members 21 having an air supply tube 27 with sealing material (not shown) on its upper end and tightly fixing a concave cap 30 with sealing material (not shown) on its lower end. Further, the casing 23 has the same slit 24 for air to exit and the same guide plates 25 on its front plate 23a as in the construction of the purifier A₉ of the ninth embodiment. A through-hole 28 for the air-supply tube 27 is made at the upper portion of the back plate 23b of the casing. The air-supply tube 27 exits the through-hole 28 and is tightly fixed with sealing material (not shown). Accordingly, the casing 23 has no through-hole at its lower portion, since one is unnecessary. Further, as shown in Figs. 20 and 21, the through-hole 28 is made in the back plate 23b of the casing. But it can be made in any plate, except the front plate 23a having the slit 24. Since the functions of the air-purifying device A₁₀ are the same as those of the air-purifying device A₉, except that the former can supply less air than the latter, the explanations of these functions are omitted.

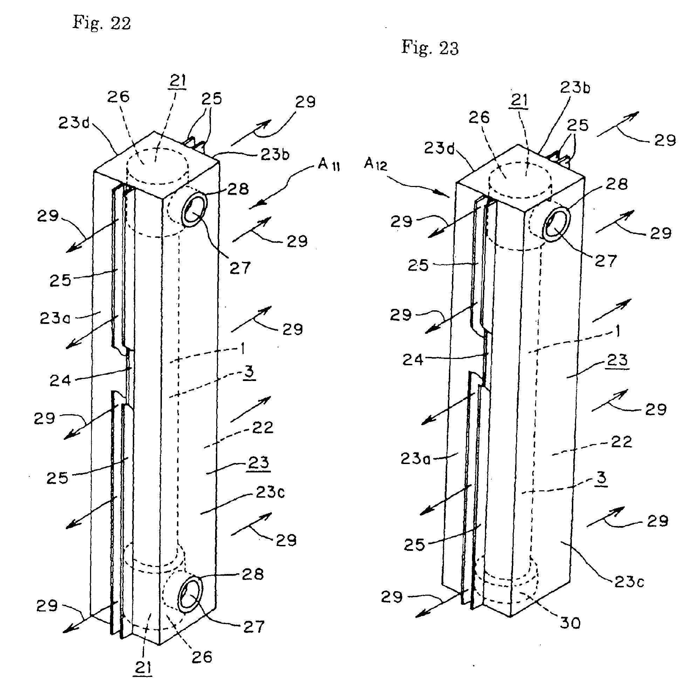

Fig. 22 is a perspective view of the eleventh embodiment of the air-purifying device of the present invention. While the air-purifying device A₉ of the ninth embodiment is constructed so that only the front plate 23a of the casing 23 is furnished with the slit 24 and the guide plate 25, the air-purifying device A₁₁ of the eleventh embodiment is constructed so that not only the front plate 23a, but also the back plate 23b of the casing 23, is furnished with the slit 24 and the guide plate 25. Further, in the air-purifying device A₉ of the ninth embodiment, the through-holes 28 are made in the back plate 23. But in the air-purifying device A₁₁ of the eleventh embodiment, the through-holes 28 are made at the upper and lower portions of one lateral plate 23c for the air-supply tubes 27 through which the air-supply tube 27 extends, and are tightly fixed with sealing material (not shown). The air-purifying device A₁₁ of the eleventh embodiment is used to form air curtains 29 on both the front side and the backside of it. As shown in Fig. 22, the through-holes 28 are made in the one lateral plate 23c, but the through-holes may be made in the other lateral plate 23d.

Fig. 23 is a perspective view of the twelfth embodiment of the air-purifying device of the present invention. As with the air-purifying device A₁₁ of the eleventh embodiment, the air-purifying device A₁₂ of the twelfth embodiment is also constructed so that the front plate 23a and the back plate 23b of the casing 23 are each furnished with the slit 24 and the guide plate 25. As with the air purifying device A₁₀ of the tenth embodiment, the air-purifying device A₁₂ is also constructed by tightly fixing an air intake member 21 having an air-supply tube 27 with sealing material (not shown) on the upper end of the hollow cylindrical filter 3 and tightly fixing a concave cap 30 with sealing material (not shown) on its lower end. Further, the casing 23 has a through-hole 28 for the air-supply tube 27. The through-hole 28 is made at the upper portion of one lateral plate 23c of the casing. The air-supply tube 27 passes through the through-hole 28 and is tightly fixed with sealing material (not shown). Accordingly, the casing 23 has no through-hole at its lower portion, since one is unnecessary. Further, as shown in Fig. 23, the through-hole 28 is made in the one lateral plate 23c, but it can be made in the other lateral plate 23d. Since the functions of the air-purifying device A₁₂ are the same as those of the air-purifying device A₁₁ except that the former can supply less air than the latter, the explanations of these functions are omitted.

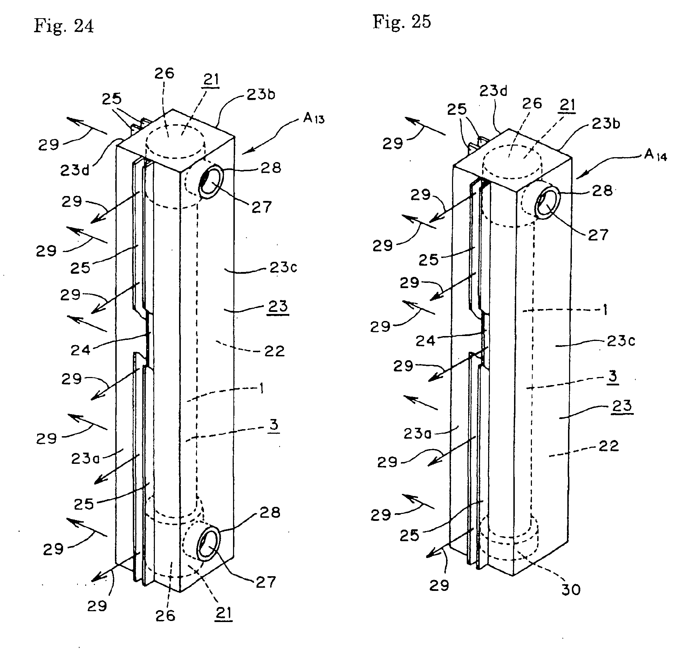

Fig. 24 is a perspective view of the thirteenth embodiment of the air-purifying device of the present invention. While the air-purifying device A₁₁ of the eleventh embodiment is constructed so that the front plate 23a and the back plate 23b of the casing 23 are each furnished with the slit 24 and the guide plate 25, the air-purifying device A₁₃ of the thirteenth embodiment is constructed so that the front plate 23a and the other lateral plate 23d of the casing 23 are each furnished with the slit 24 and the guide plate 25. As with the air-purifying device A₁₁ of the eleventh embodiment, the air-purifying device A₁₃ of the thirteenth embodiment is also constructed by the through-holes 28 being made at the upper and lower portions of one lateral plate 23c for the air-supply tube 27 through which it extends. The air supply tubes are tightly fixed with sealing material (not shown). The air-purifying device A₁₃ of the thirteenth embodiment is used to form air curtains 29 on both the front side and lateral side of it. As in Fig. 24, the through-holes 28 are made in the one lateral plate 23c, but the through-holes 28 may be made in the back plate 23b.

Fig. 25 is a perspective view of the fourteenth embodiment of the air-purifying device of the present invention. As with the air-purifying device A₁₃ of the thirteenth embodiment, the air-purifying device A₁₄ of the fourteenth embodiment is constructed so that the front plate 23a and the lateral plate 23d of the casing 23 are each furnished with the slit 24 and the guide plate 25. As with the air-purifying device A₁₂ of the eleventh embodiment, it is constructed by tightly fixing an air intake member 21 having an air supply tube 27 with sealing material (not shown) on the upper end of the hollow cylindrical filter 3 and tightly fixing a concave cap 30 with sealing material (not shown) on its lower end. Further, the casing 23 has a through-hole 28 for the air-supply tube 27. The through-hole 28 is located at the upper portion of the other lateral plate 23c of the casing. The air-supply tube 27 passes through the through-hole 28 and is tightly fixed with sealing material (not shown). Accordingly, the casing 23 has no through-hole at its lower portion, since one is not needed. Further, as in Fig. 25, the through-hole 28 is made in the one lateral plate 23c, but it can also be made in the back plate 23b. Since the functions of the air-purifying device A₁₄ are the same as those of the air-purifying device A₁₃, except that the former can supply less air than the latter, the explanations of them are omitted.

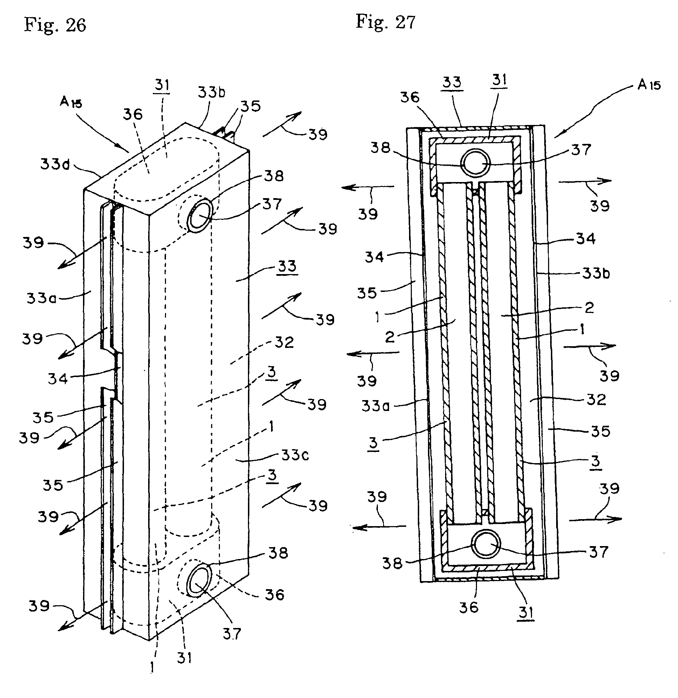

Fig. 26 is a perspective view of the fifteenth embodiment of the air-purifying device of the present invention. Fig. 27 is a longitudinal sectional view of it. While the air-purifying device A₁₁ of the eleventh embodiment, shown in Fig. 22, is made of one hollow cylindrical filter 3, the air-purifying device A₁₅ of the eleventh embodiment is made of multiple (two in each of Figs. 26 and 27) hollow cylindrical filters in parallel. As shown Figs. 26 and 27, a pair of air-intake members 31 are tightly fixed with sealing material (not shown) on the upper and lower ends of the two hollow cylindrical filters 3 to bind them together. The two hollow cylindrical filters 3 are installed in a hollow square, and in a pole-shaped casing 33, whose width is greater than its depth. The casing 33 has two slits 34, one in the front plate 33a and one in the back plate 33b of it, for air to exit along the longitudinal line of each plate. Guide plates 35 are furnished on both sides of each slit 34. Each said air-intake member 31 that is mounted on the hollow cylindrical filters 3 is made of an elliptic cylinder-shaped hollow body 36 that has a closed bottom and an air-supply tube 37 that communicates with the air-passage 2 of the hollow cylindrical filters that extend from the middle of the peripheral wall of the elliptic cylinder-shaped body 36. The air-intake members 31, which are composed of the above elements, are tightly fixed with sealing material (not shown) on the upper and lower ends of the hollow cylindrical filters 3, and a through-hole 38 is made at each upper and lower portion of the one lateral plate 33c of the casing. Each air-supply tube 37 passes through each through-hole 38 and is tightly fixed with sealing material (not shown).

The air-purifying device A₁₅ of the fifteenth embodiment of the present invention that is composed of the above elements is operated by blowing air into the air passage 2 through each air-supply tube 37 from an air-providing device (not shown), such as an air fan, connected with each air supply tube 37 of each air-intake member 31. The air supplied into the air passage 2 exits the annular portion of the hollow cylindrical filter 3 into a space 32 in the casing 33 in a uniform distribution of the velocity, circumferentially as well as longitudinally, because of the pressure caused by the discharge of the air in the air-providing device. The air in the space 32 exits the slit 24, and forms an air curtain 39. Further, as in Figs. 26 and 27, the through-hole 38 is made in the one lateral plate 33c, but it can also be made in the other lateral plate 33d.

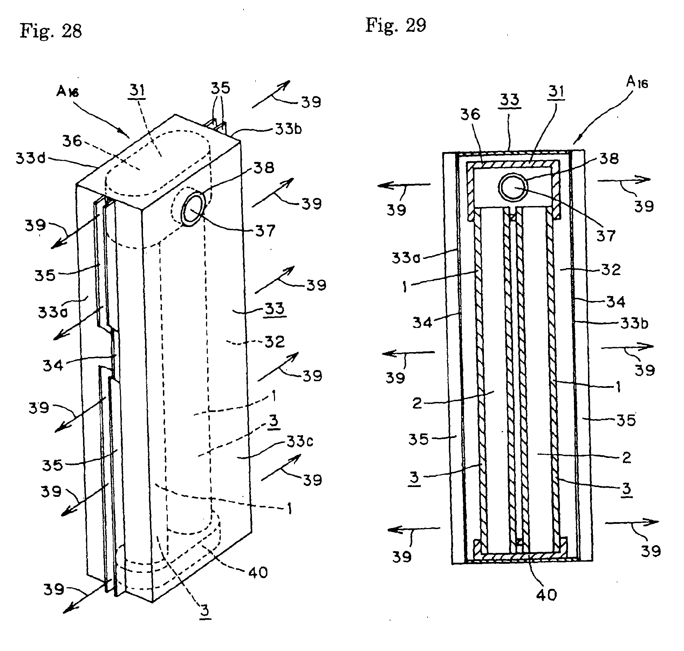

Fig. 28 is a perspective view of the sixteenth embodiment of the air-purifying device of the present invention and Fig. 29 is a longitudinal sectional view of it. As with the air-purifying device A₁₅ of the fifteenth embodiment, the air-purifying device A₁₆ of the sixteenth embodiment is made of multiple (two in each of Figs. 28 and 29) hollow cylindrical filters in parallel, and slits 34 and guide plates 35 are furnished on both the front plate 33a and on the back plate 33b of a casing 33. The air intake member 31, which has the air supply tube 37 that is composed of the same elements as those of the fifteenth embodiment, is tightly fixed with sealing material (not shown) on the upper ends of the hollow cylindrical filters 3, and an elliptic cylinder-shaped cap that has a closed bottom to combine the hollow cylindrical filters 3 is tightly fixed with sealing material (not shown) on the lower end of the hollow cylindrical filters. Further, a through-hole 38 is made at the upper portion of the one lateral plate of the casing 33, and an air-supply tube 37 passes through the through-hole 38 and is tightly fixed with sealing material (not shown). Accordingly, the casing 33 has no through-hole at its lower portion, since one is not needed. Further, as in Figs. 28 and 29, the through-hole 38 is made in the lateral plate 33c of the casing, but it can be made in the other lateral plate 33d of it. Since the functions of the air-purifying device A₁₆ are the same as those of the air-purifying device A₁₅, except that the former can supply less air than can the latter, the explanations of them are omitted.

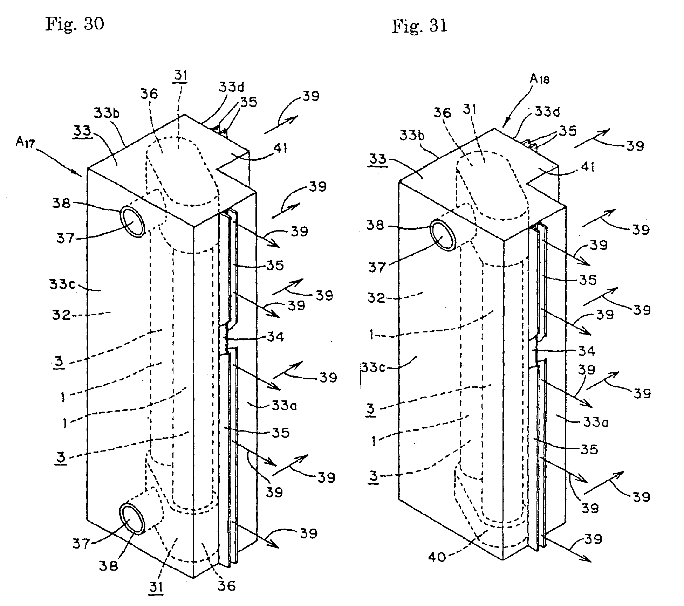

Fig. 30 is a perspective view of the seventeenth embodiment of the air-purifying device of the present invention. While the air-purifying device A₁₅ of the fifteenth embodiment is made by installing two hollow cylindrical filters in parallel in a hollow, square, and pole-shaped casing 33 whose width is greater than its depth, the air-purifying device A₁₇ of the seventeenth embodiment is made by installing multiple (two in Fig. 30) hollow cylindrical filters diagonally in a hollow, square, and pole-shaped casing 33 having an L-shaped cross section.

As shown in Figs. 26 and 27, a pair of air-intake members 31 are tightly fixed with sealing material (not shown) on the upper and lower ends of the two hollow cylindrical filters 3 to bind them together. The two hollow cylindrical filters 3 are installed in a hollow, square, and pole-shaped casing 33 having an L-shaped cross section. The casing 33 has two slits 34, one in the front plate 33a of it and the other in the lateral plate 33d of its protruding portion 41, for air to exit along the longitudinal line of each plate. Guide plates 35 are furnished on both sides of each slit 34. Each said air intake member 31, which are all mounted in the hollow cylindrical filters 3, is made of an elliptic and cylinder-shaped hollow body that has a closed bottom and an air supply tubes 37 that communicates with the air passage 2 of the hollow cylindrical filters and extends from the middle of its lateral wall.

The air-intake members 31, which are composed of the above elements, are tightly fixed with sealing material (not shown) on the upper and lower ends of the hollow cylindrical filters 3, and two through-holes 38 are made at each upper and lower portion of the one lateral plate 33c of the casing. Each air-supply tube 37 passes through each through-hole 38 and is tightly fixed with sealing material (not shown).

The air-purifying device A₁₇ of the seventeenth embodiment of the present invention, which is composed of the above elements, is operated by blowing air into the air passage 2 through each air-supply tube 37 from an air-providing device (not shown) such as an air fan connected with each air-supply tube 37 of each air-intake member 31. The air supplied into the air passage 2 exits the annular portion of the hollow cylindrical filter 3 into a space 32 in the casing 33 in a uniform distribution of the velocity circumferentially as well as longitudinally because of the pressure caused by the discharge of the air-providing device. The air in the space 32 exits the slit 24 and forms an air curtain 39. Further, as in Fig. 30, the through-hole 38 is made in the one lateral plate 33c, but it can also be made in the back plate 33b.

Fig. 31 is a perspective view of the eighteenth embodiment of the air-purifying device of the present invention. As with the air-purifying device A₁₇ of the seventeenth embodiment, the air-purifying device A₁₈ of the eighteenth embodiment is made by installing multiple (two in Fig. 31) hollow cylindrical filters diagonally in a hollow, square, and pole-shaped casing 33 having an L-shaped cross section. An air-intake member 31 that is composed of the same elements as those of the seventeenth embodiment is tightly fixed with sealing material (not shown) on the upper ends of the hollow cylindrical filters 3, and an elliptic cylinder-shaped cap that has a closed bottom to combine the hollow cylindrical filters 3 is tightly fixed with sealing material (not shown) on the lower ends of the hollow cylindrical filters. Further, a through-hole 38 is located at the upper portion of the one lateral plate of the casing 33, and an air-supply tube 37 passes through the through-hole 38 and is tightly fixed with sealing material (not shown). Accordingly, the casing 33 has no through-hole at its lower portion, since one is not needed. Further, as in Fig. 31, the through-hole 38 is made in the lateral plate 33c of the casing, but it can also be made in the back plate 33d of it. Since the functions of the air-purifying device A₁₈ are the same as those of the air-purifying device A₁₇, except that the former can supply less air than the latter, the explanations of them are omitted.

Although the supporting rod 10 that is shown in the explanations of the third and fourth embodiments is not shown in each of the hollow cylindrical filters of the fifth and eighteenth embodiments, obviously it may be used. By adding the supporting rod 10, the functions of the third and fourth embodiment are added to those from the fifth to eighteenth embodiments.

### Industrial Applicability

As mentioned above, the air-purifying device of the present invention is used when the place to install it is an elongated space, the air intake points are limited to both ends of the elongated space, and the filtered air has to exit the elongated space in a uniform distribution of the velocity circumferentially as well as longitudinally. Further, since the air-purifying device can be formed in any shape that has the same diameter as that of the filters by arranging multiple hollow cylindrical filters in a certain position, and the air can be blown out from both sides of the purifier, it is used when it is necessary for air to be blown out from both sides. Further, it is used to form air curtains on both the front side and the backside of it as well as both the front side and the lateral side of it.

## Claims

1. An air-purifying device comprising a hollow cylindrical filter made by forming a filter media in a cylindrical shape having an air passage in the central hollow portion, and a pair of air intake members each having an air intake hole fixed on each end of the hollow cylindrical filter so that the hole communicates with the air passage.

2. An air-purifying device comprising a hollow cylindrical filter made by forming a filter media in a cylindrical shape having an air passage in the central hollow portion, an air intake member having an air intake hole fixed on one end of the hollow cylindrical filter so that the hole communicates with the air passage, and a cap fixed on the other end of the hollow cylindrical filter.

3. An air-purifying device comprising a hollow cylindrical filter made by forming a filter media in a cylindrical shape having an air passage in the central hollow portion, a pair of air intake members each having an air intake hole fixed on each end of the hollow cylindrical filters so that the holes communicate with the air passage, and a supporting rod with which the air intake members are coupled at both ends of the supporting rod in the air passage.

4. An air-purifying device comprising a hollow cylindrical filter made by forming a filter media in a cylindrical shape having an air passage in the central hollow portion, an air intake member having an air intake hole fixed on one end of the hollow cylindrical filter so that the air intake hole communicates with the air passage, a cap fixed on the other end of the hollow cylindrical filter, and a supporting rod with which the intake member and the cap are coupled at both ends of the supporting rod in the air passage.

5. An air-purifying device comprising multiple hollow cylindrical filters positioned in parallel and each being made by forming a filter media in a cylindrical shape having an air passage in the central hollow portion, and a pair of air intake members fixed on both ends of the hollow cylindrical filters,
wherein each of the air intake members is constructed as a box having a passage for air inside it and having holes to be inserted in the upper and lower ends of each hollow cylindrical filter in one side plate of the box and having an air-supply hole in one of the other side plates of it.

6. An air-purifying device comprising multiple hollow cylindrical filters positioned in parallel and each being made by forming a filter media in a cylindrical shape having an air passage in the central hollow portion, and a pair of air intake members fixed on both ends of the hollow cylindrical filters,
wherein each of the air intake members is constructed as a box having a passage for air inside it and having holes to be attached at the upper and lower ends of each hollow cylindrical filter in one side plate of the box and having air supply holes in two opposite side plates of it.

7. An air-purifying device comprising multiple hollow cylindrical filters positioned in parallel and each being made by forming a filter media in a cylindrical shape having an air passage in the central hollow portion, an air intake member fixed on the ends of one side of the hollow cylindrical filters, and a cap fixed on the other ends of them,
wherein each of the air intake members is constructed as a box having a passage for air inside it and having holes to be attached at either the upper or lower end of each hollow cylindrical filter in one side plate of the box and having an air supply hole in one of the other side plates of it.

8. An air-purifying device comprising multiple hollow cylindrical filters positioned in parallel and each being made by forming a filter media in a cylindrical shape having an air passage in the central hollow portion, an air intake member fixed on ends of one side of the hollow cylindrical filters, and a cap fixed on the other ends of them,
wherein each of the air intake members is constructed as a box having a passage for air inside it and having holes to be attached at either the upper or lower end of each hollow cylindrical filter in one side plate of the box and having an air supply hole in each of the two opposite side plates of it.

9. An air-purifying device comprising a hollow cylindrical filter made by forming a filter media in a cylindrical shape having an air passage in the central hollow portion, a pair of air intake members fixed on both ends of the hollow cylindrical filter, and a box-shaped hollow casing having a space for air to exit the air passage that houses said hollow cylindrical filter and said air intake members,
wherein each of the air intake members has an air supply tube that extends from it, that communicates with the air passage of the hollow cylindrical filter, and that is inserted into and fixed in a through-hole made in any plate of the casing except the front plate of it, and wherein the casing has a slit in its front plate for air to exit along the central longitudinal line of the plate, and wherein guide plates are furnished on both sides of the slit.

10. An air-purifying device comprising a hollow cylindrical filter made by forming a filter media in a cylindrical shape having an air passage in the central hollow portion, an air intake member fixed on one end of the hollow cylindrical filter, a cap fixed on the other end of the hollow cylindrical filter, and a box-shaped hollow casing having a space for air to exit the air passage that houses said hollow cylindrical filter, said air intake member, and said cap,
wherein the air intake member has an air supply tube that extends from it, that communicates with the air passage of the hollow cylindrical filter, and that is inserted and fixed into the through-hole made in any plate of the casing, except the front plate of it, the casing has a slit in its front plate for air to exit along the central longitudinal line of the plate, and wherein guide plates are furnished on both sides of the slit.

11. An air-purifying device comprising a hollow cylindrical filter made by forming a filter media in a cylindrical shape having an air passage in the central hollow portion, a pair of air-intake members fixed on each end of the two ends of the hollow cylindrical filter, and a box-shaped hollow casing having a space for air to exit the air passage that houses said hollow cylindrical filter and said air-intake members,
wherein each of the air intake members has an air supply tube that extends from it, that communicates with the air passage of the hollow cylindrical filter, and that is inserted and fixed in the through-hole made in any lateral plate of the casing, wherein the casing has two slits, one in its front plate and another in its back plate, for air to exit along the central longitudinal line of each plate, and wherein guide plates are furnished on both sides of each of the slits.

12. An air-purifying device comprising a hollow cylindrical filter made by forming a filter media in a cylindrical shape having an air passage in the central hollow portion, an air-intake member fixed on one end of the hollow cylindrical filter, a cap fixed on the other end of the hollow cylindrical filters, and a box-shaped hollow casing having a space for air to exit from the air passage that houses said hollow cylindrical filter, said air intake member, and said cap,
wherein each of the air intake members has an air supply tube that extends from it, that communicates with the air passage of the hollow cylindrical filter, and that is inserted and fixed in the through-hole made in any lateral plate of the casing, wherein the casing has two slits, one in its front plate and another in its back plate, for air to exit along the central longitudinal line of each plate and its back plate, and wherein guide plates are furnished on both sides of each of the slits.

13. An air-purifying device comprising a hollow cylindrical filter made by forming a filter media in a cylindrical shape that has an air passage in the central hollow portion, a pair of air intake members fixed on both ends of the hollow cylindrical filter, and a box-shaped hollow casing having a space for air to exit the air passage that houses said hollow cylindrical filter and said air intake members,
wherein each of the air intake members has an air supply tube that extends from it, that communicates with the air passage of the hollow cylindrical filter, and that is inserted and fixed in the through-hole made in either back plate or in one lateral plate of the casing, wherein the casing has two slits, one in its front plate and the other in the other lateral plate of it, for air to exit along the central longitudinal line of each plate, and wherein guide plates are furnished on both sides of each of the slits.

14. An air-purifying device comprising a hollow cylindrical filter made by forming a filter media in a cylindrical shape having an air passage in the central hollow portion, an air intake member fixed on one end of the hollow cylindrical filter, a cap fixed on the other end of the hollow cylindrical filters, and a box-shaped hollow casing having a space for air to exit the air passage that houses said hollow cylindrical filter, said air intake member, and said cap,
wherein each of the air intake members has an air supply tube that extends from it, that communicates with the air passage of the hollow cylindrical filter, and that is inserted and fixed in the through-hole made in either back plate or in one lateral plate of the casing, wherein the casing has two slits, one in its front plate and the other in the other lateral plate of it, for air to exit along the central longitudinal line of each plate, and wherein guide plates are furnished on both sides of each of the slits.

15. An air-purifying device comprising multiple hollow cylindrical filters positioned in parallel and each being made by forming a filter media in a cylindrical shape having an air passage in the central hollow portion, a pair of air-intake members fixed on both ends of the hollow cylindrical filters, and a box-shaped hollow casing having a space for air to exit the air passage that houses said hollow cylindrical filters and said air intake members,
wherein each of the air intake members is big enough to bind the multiple hollow cylindrical filters and has an air-supply tube that extends from it, that communicates with the air passages of the hollow cylindrical filters, and that is inserted and fixed in the through-hole made in any lateral plate of the casing, and wherein the casing has two slits, one in its front plate and the other in its back plate, for air to exit along the central longitudinal line of each plate, and wherein guide plates are furnished on both sides of each of the slits.

16. An air-purifying device comprising multiple hollow cylindrical filters positioned in parallel, each being made by forming a filter media in a cylindrical shape having an air passage in the central hollow portion, an air intake member fixed on ends of one side of the hollow cylindrical filters, a cap fixed on the other ends of them, and a box-shaped hollow casing having a space for air to exit from the air passage that houses said hollow cylindrical filters, said air intake member, and said cap,
wherein each of the air-intake members is big enough to bind the multiple hollow cylindrical filters and has an air supply tube that extends from it, that communicates with the air passages of the hollow cylindrical filters, and that is inserted and fixed in the through-hole made in any lateral plate of the casing, and wherein the casing has two slits, one in its front plate and the other in its back plate, for air to exit along the central longitudinal line of each plate and its back plate, and wherein guide plates are furnished on both sides of each of the slits.

17. An air-purifying device comprising multiple hollow cylindrical filters positioned in parallel, each being made by forming a filter media in a cylindrical shape having an air passage in the central hollow portion, a pair of air intake members fixed on both ends of the hollow cylindrical filters, and a box with a protruding portion shaped as a hollow casing having a space for air to exit from the air passage that houses said hollow cylindrical filters and said air intake members,
wherein each of the air intake members is big enough to bind the multiple hollow cylindrical filters and has an air supply tube that extends from it, communicates with the air passages of the hollow cylindrical filters, and that is inserted and fixed in the through-hole made in either back plate or one lateral plate of the casing, wherein the casing has two slits, one in its front plate and another in its lateral plate of the protruding portion, for air to exit along the central longitudinal line of each plate, and wherein guide plates are furnished on both sides of each of the slits.

18. An air-purifying device comprising multiple hollow cylindrical filters positioned in parallel, each being made by forming a filter media in a cylindrical shape having an air passage in the central hollow portion, an air intake member fixed on ends of one side of the hollow cylindrical filters, a cap fixed on the other ends of them, and a box with a protruding portion shaped as a hollow casing having a space for air to exit the air passage that houses said hollow cylindrical filters, said air intake member, and said cap,
wherein each of the air intake members is big enough to bind the multiple hollow cylindrical filters and has an air supply tube that extends from it, that communicates with the air passages of the hollow cylindrical filters, and that is inserted and fixed in the through-hole made in either back plate or one lateral plate of the casing, the casing has two slits, one in its front plate and another in its lateral plate of the protruding portion, for air to exit along the central longitudinal line of each plate, and wherein guide plates are furnished on both side of each of the slits.

19. An air-purifying device according to any one of claims 5, 6, 9, 13, 15, and 17, wherein the air intake members are coupled at both ends of a supporting rod in the air passage of the hollow cylindrical filter.

20. An air-purifying device according to any one of claims 7, 8, 10, 12, 14, 16, and 18, wherein the intake member and the cap are coupled at both ends of a supporting rod in the air passage of the hollow cylindrical filter.
